# EUROPEAN PATENT APPLICATION

(11) **EP 3 570 133 A1**
(43) Date of publication of application: **20.11.2019**
(21) Application number: 18172682.9
(22) Date of filing: 16.05.2018
(51) Int. Cl.: G05D 1/02, H04W 4/00

(54) **METHOD AND SYSTEM FOR CONTROLLING A VEHICLE MOVING WITHIN AN ENVIRONMENT**

(71) Applicant: Siemens Aktiengesellschaft, 80333 München (DE)
(72) Inventor: Kornbichler, Andreas, 83623 Dietramszell (DE); Ramirez, Alejandro, 80797 München (DE); Walewski, Joachim, 82008 Unterhaching (DE)

(57) **Abstract**

The disclosed embodiments for controlling a vehicle as described herein generally involve an optimized trajectory of the vehicle enabling the vehicle to complete its route while meeting wireless communication quality constraints, or, quality of service parameters of the wireless network. According to an embodiment a route controller determines a route control signal for controlling the vehicle to complete a route. The route control signal represents a route trajectory of the vehicle that enables the vehicle to complete the route in accordance with an optimization criterion. A wireless communication quality controller determines a wireless communication quality control signal for controlling the vehicle based on the route control signal. The network coverage control signal represents a modification to the route trajectory of the vehicle determined by the route controller to cause the vehicle to deviate from the route trajectory to meet a wireless communication quality constraint. The route control signal and the wireless communication quality control signal are combined to generate a combined control signal representing an optimized trajectory of the vehicle that meets the communication quality constraint and enables the vehicle to complete the route. Motion of the vehicle is controlled to follow the optimized trajectory according to the combined control signal.

## Description

### TECHNICAL FIELD

The disclosed embodiments generally relate to computer-controlled entities and more specifically to a controller for controlling a vehicle moving within an environment.

### BACKGROUND

In factories of the future, a growing number of interactions among humans and industrial robots will take place. Wireless technologies for exchanging data penetrate industrial shop floor environments due to the advantages that these technologies possess over wired solutions . Vehicles, such as automated guided vehicles (AGVs), cranes, and forklifts are increasingly designed to be controlled by use of wireless data exchange. To that end, ubiquitous wireless network coverage within industrial environ-ments is paramount. This is a daunting requirement since indus-trial environments come with very challenging when compared with office environments. Industrial environments are dominated by metal objects such as production machines, storage racks, mate-rials, and vehicles. These objects impair radio propagation and create "coverage holes". Today, guided vehicles and autonomous vehicles are controlled or at least supported by a stationary control system using wireless data exchange.

Vehicle control systems usually provide a scheme of possible routes through which vehicles are guided. In order to prepare optimized routes for vehicles, it is necessary to take certain constraints into consideration, including security constraints or commissioning constraints for the case that a multiplicity of different goods has to be collected by the vehicle along its route. An optimized route, however, might be inadequate in terms of wireless connectivity of the vehicle along the optimized route.

Besides the harsh nature of industrial environments, other influencing factors may impair wireless connectivity of a guided vehicle: a large number of wireless communication devices might be connected with an access point located along the route of the vehicle so that the vehicle is inhibited from connecting to one of the access points. Another impairing effect is the deterioration of the wireless network coverage due to interference, for instance from radio signals bouncing off reflecting metallic containers temporarily stored in a vicinity of the route. These and other local impairments of the communication quality within the environment of the vehicle may severely affect the connectivity and thus, controllability, of the vehicle.

Accordingly there is a need in the art for controlling a vehicle movement within an environment in consideration of local impairments of the communication quality within a wireless network.

### SUMMARY

Embodiments for controlling a vehicle as described herein generally involve an optimized trajectory of the vehicle enabling the vehicle to complete its route while meeting connectivity constrains such as quality of service.

A method, non-transitory computer-readable storage medium, and a controller control the vehicle. A route controller determines a route control signal for controlling a vehicle en route. The route control signal represents a route trajectory of the vehicle that enables the vehicle to complete the route in accordance with an optimization criterion. A wireless communication quality controller determines a wireless communication quality control signal for controlling the vehicle based on the route control signal. The network coverage control signal represents a modification to the route trajectory of the vehicle determined by the route controller to cause the vehicle to deviate from the route trajectory in order to meet a wireless communication quality constraint. The route control signal and the wireless communication quality control signal are combined to generate a combined control signal representing an optimized trajectory of the vehicle that meets the communication quality constraint and enables the vehicle to complete the route. Motion of the vehicle is controlled to follow the optimized trajectory according to the combined control signal.

The method steps are not necessarily restricted to their sequential order specified above. Particularly, the step of determining a route control signal can be executed before or while executing the step of determining a wireless communication quality control signal.

### DESCRIPTION OF THE DRAWING

The objects as well as further advantages of the present embodiments will become more apparent and readily appreciated from the following description of the preferred embodiments, taken in conjunction with the accompanying drawing in which:
- FIG. 1: shows a schematic floor plan of an environment along with a wireless network coverage map;
- FIG. 2: shows a high-level block diagram of an embodiment of a controller for controlling a vehicle; and;
- FIG. 3: shows a diagram illustrating an example of a control outcome achieved by an embodiment of the controller.

### DETAILED DESCRIPTION

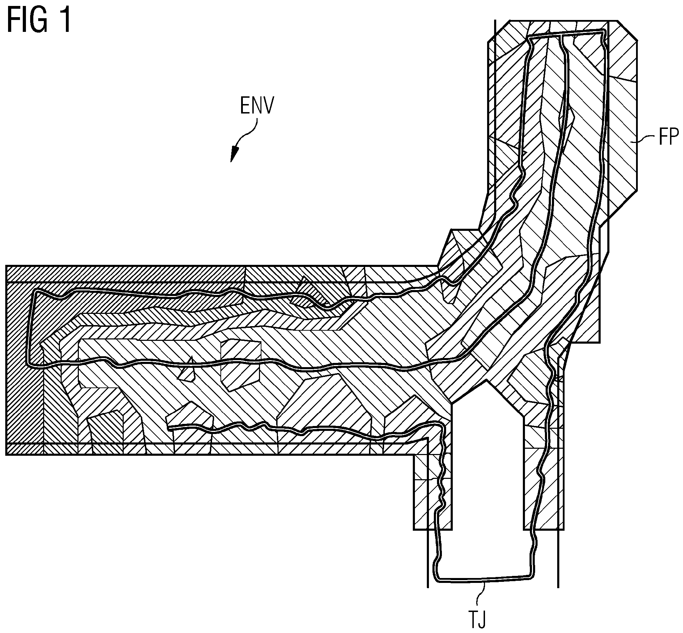

In FIG. 1 a schematic floor plan FP of an environment ENV is depicted. The floor plan FP is superimposed by a wireless network coverage map. The J-shaped floor plan shows an industrial site as an exemplary environment. The floor plan FP is neglecting industrial equipment or facilities like production machines, storage racks, materials, and so on.

The floor plan FP is superimposed by a coverage map which comprises a number of wireless network coverage areas wherein each area provides a signal strength of a defined level within this coverage area. In the drawing more or less dense hatching of a respective coverage area denotes higher or lower signal strength within the hatched coverage area. Multiple - not shown - wireless access points or wireless base stations are distributed among several locations of the industrial site in order to provide for wireless coverage of the site.

In one embodiment the coverage map comprises a number of wireless network coverage areas wherein each area provides a multiplicity of quality constraints of a defined level within this coverage area. The wireless communication quality constraints may comprise a signal quality, an availability, a data rate, a latency, a bit error ratio, a network status, and/or packet error ratio.

The floor plan FP is further superimposed by a number of trajectories TJ which are symbolized as rail trails in the drawing. These trajectories TJ are determined by - not shown - vehicles moving within the environment. The movement of vehicles, such as automated guided vehicles or AGVs, cranes and forklifts, may be one of a guided movement, an autonomous movement, or a semi-autonomous movement. Wireless clients for a wireless exchange of data between vehicles and the wireless network infrastructure may be mounted on - or being part of - the vehicles.

Guided vehicles or autonomous guided vehicles in the industrial domain are usually continuously connected to other vehicles and/or a controller for controlling one or more vehicles. A multiplicity of vehicles may be referred to as a fleet. The controller serves, among others, as a traffic-guidance system. One rational behind this need is safety within the environment, including the safety of humans within the environment. A further function of the controller may include fleet control and management.

A range over which the vehicle can operate is covered by access points that address different portions of this range. This portion may be referred to as a radio cell. If a vehicle moves from a first point A to second point B, it may have the possibility to take different routes.

A route controller as a portion of the controller can, for instance, guide the vehicle on a shortest route. However, the chosen route might not be suitable in terms of wireless connectivity to and from the vehicle.

For the purpose of wireless connectivity, vehicles are usually equipped with a radio transceiver. This transceiver may, besides its main purpose of exchanging data, be further used for measuring the wireless communication quality, including proximate radio channels, fading of signal strength, connections with other transceivers, etc. These measurements can be taken into account for routing the vehicle through areas with better wireless network coverage than those areas along the shortest path. However, the proximate nature of the measurements does not provide a suitable base for an alternative routing of the vehicle. This is mainly due to the limited spatial range of these measurements which is to insufficient for anticipating a suitable route, particularly in the case of densely packed industrial environments.

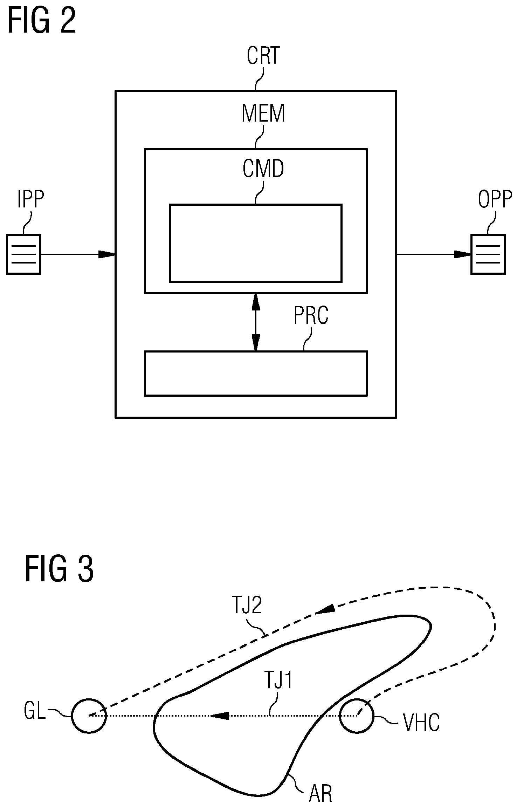

FIG. 2 is a block diagram illustrating an embodiment of a controller CRT for controlling a vehicle which may operate according to any of the principles described herein. The controller CRT receives one or more input parameters IPP. The input parameters IPP may comprise, for example, sensor data used to determine the vehicle's position, velocity, acceleration, orientation, joint configuration, or proximity of surrounding objects, control inputs that specify a particular objective for the vehicle, or other inputs that guide operation of the vehicle as described herein. The controller CRT produces one or more control outputs OPP to control movement of the vehicle.

In one embodiment, the controller CRT comprises a processor PRC and a memory MEM. The processor PRC processes data signals and may comprise various computing architectures. Although only a single processor PRC is shown in FIG. 1, multiple processors may be included. The processor PRC comprises an arithmetic logic unit, a microprocessor, a general purpose computer, or some other information appliance equipped to transmit, receive and process electronic data signals from the memory MEM or from external inputs.

The memory MEM comprises a non-transitory computer-readable storage medium that stores computer-executable instructions and computer-readable data. The instructions may comprise code for performing any and/or all of the techniques described herein. The memory MEM may furthermore temporarily or persistently store data inputted to the controller CRT (e.g., input parameter(s) IPP), data to be outputted by the controller CRT (e.g., control output(s) OPP), and any intermediate data used to carry out the process steps of the controller CRT described herein. Memory MEM may comprise, for example, a dynamic random access memory (DRAM) device, a static random access memory (SRAM) device, Flash RAM, non-volatile storage, combinations of the above, or some other memory device known in the art. In operation, the processor PRC loads the computer-executable instructions and/or data from the memory MEM and executes the instructions to carry out the functions described herein.

In one embodiment, the memory MEM stores a control module CMD. The control module CMD includes computer-executable program instructions that when executed by the processor PRC, cause the controller CRT to receive the input parameter(s) IPP, proces the input parameter(s) IPP according to the techniques described herein, and generate the control output(s) OPP to control the vehicle.

Particularly, the control module CMD generates control outputs OPP that control the vehicle to achieve its objective while operating safely in the presence of humans or other intelligent or non-intelligent entities in the environment of the vehicle.

The controller CRT may include more or less components than those shown in FIG. 2 without departing from the scope of the embodiments. For example, the controller CRT may include additional memory, such as, for example, a first- or second-level cache, or one or more application-specific integrated circuits (ASICs). In other embodiments, the controller CRT may be implemented entirely in hardware, in firmware, or using a combination of software, firmware, and hardware.

According to an embodiment, a controller for controlling a vehicle moving within an environment is provided that may be used as control module CMD in the controller CRT of FIG. 2. The controller comprises a route controller, a wireless communication quality controller, a combining controller and a motion controller. Alternative embodiments may include additional or different components.
- The route controller determines a route control signal for controlling the vehicle to complete a route. The route control signal represents a route trajectory of the vehicle that enables the vehicle to complete the route in accordance with an optimization criterion, e.g. according to an optimal path and/or a shortest distance or according to safety considerations, e.g. for avoiding collisions with other entities, for avoiding harmful areas within the environment or for optimizing an energy efficiency of the path. In general, the route controller estimates a state of the vehicle based on measurements taken from various sensors. The route controller predicts a motion of one or more other entities (e.g., humans or other moving objects or intelligent agents) in the vicinity of the vehicle and based on measurements and a motion model. The measurements could include sensor data such as radar, LiDAR, images, video, or other sensed data that can be used for predicting a state of the other entities that may include, for example, position, velocity, acceleration, orientation, or other configuration of the other entities. The route controller may apply the motion model to the states of other entities in order to predict a future trajectory of the other entities.
- The wireless communication quality controller generates a wireless communication quality control signal based on the route control signal. The network coverage control signal represents a modification to the route trajectory of the vehicle determined by the route controller to cause the vehicle to deviate from the route trajectory in order to meet a wireless communication quality constraint. In other words, the wireless communication quality control signal represents a modification to apply to the route control signal trajectory specified by the route controller in order to ensure that the vehicle follows a trajectory to achieve the goal of meeting a wireless communication quality constraint. Particularly, the wireless communication quality control, when combined with the route control signal, may cause the vehicle to deviate from the route trajectory when desirable to meet a communication quality constraint. According to an embodiment, the wireless communication quality controller uses a data representation of the coverage map for determining the wireless communication quality constraints along the route trajectory of the vehicle. According to another embodiment, the wireless communication quality controller uses measurements of the wireless communication quality constraints delivered by one or more controlled vehicles for determining the wireless communication quality constraints along the route trajectory of the vehicle. The measurements of the wireless communication quality constraints may be further used for updating the data representation of the coverage map.
- The combining controller combines the route control signal and the wireless communication quality control signal for generating an optimized or combined trajectory of the vehicle that meets the communication quality constraint and enables the vehicle to complete the route. Such optimized trajectory does not necessarily deliver a purely connectivity-optimized trajectory. Instead, an appropriate connectivity in combination with a resource-efficient route may be an objective of the optimized trajectory. Optionally, parameters of the wireless communication quality controller and/or the combining controller may be adjusted in order to emphasize one or more objectives of the optimized trajectory. A particular adjustment could even provide an optimized route with reduced network coverage compared to alternative routes, especially in cases where important network resources have to be reserved in favor of a non-critical data exchange of vehicles.
- The option motion controller controls the motion of the vehicle to follow the optimized trajectory according to the combined control signal.

According to an embodiment, the controller may be part of a stationary control system or, alternatively, integrated into a vehicle. A controller integrated into a vehicle may control other vehicles which are not equipped with a controller.

According to an embodiment, parts of the controller may be part of a stationary control system while other parts of the controller, e.g. the combining controller, may be integrated into the vehicle.

The outcome achieved by an embodiment of the controller is shown in FIG. 3 in an example scenario involving vehicle VHC. In this example scenario, the route controller will command the vehicle VHC to go straight towards its goal GL according to the route trajectory TJ1. However, the wireless communication quality controller determines that within the area AR, covering the route trajectory TJ1, a wireless communication quality constraint is not met. Since the route trajectory TJ1 is not meeting the desired communication quality, the wireless communication quality controller causes a modified trajectory TJ2 to be followed towards the goal GL and avoiding the area AR of poor communication quality.

According to an embodiment, each of a plurality of wireless communicating vehicles moving within the environment determines - constantly, occasionally or on demand - at least one parameter indicating the wireless communication quality of the wireless network. The vehicles determine the received signal strength of associated base stations for one or more differing channels. Other parameters may include a signal quality, latency, a bit error ratio, a network status, and/or packet error ratio.

According to an embodiment, these parameters are transferred to the wireless communication quality controller in order to update the data representation of the coverage map of the environment. Before, during, or after determination of at least one parameter, a location of said wireless client is determined. The location of the vehicle is associated with the determination of said parameter. Association of the location with the determination of said parameter may practically mean generating a complex data set including one or more parameters along with location data. The location of the vehicle may be determined by the vehicle, by a co-operation of more than one vehicle, by a co-operation of more than one vehicle with at least one base station or wireless access point and/or by a co-operation of more than one vehicle with an indoor localization system.

Using a multiplicity of vehicles moving within the environment, the network coverage can be determined by using each individual vehicle as a »sensor«.

According to an embodiment, controlling the motion of the vehicle to follow the optimized trajectory according to the combined control signal is carried out by sending a complete route plan as the combined control signal, whereby the movement of the vehicle is determined autonomously by the vehicle itself.

According to an embodiment, the vehicle may submit a work plan to the route controller, including intermediate locations along the route which are required for operations of the vehicle.

The embodiments are not restricted to a particular wireless network protocol and include the usage of wireless communication protocols, such as:
- A series of wireless communication standards developed by the Institute of Electrical and Electronics Engineers or IEEE:
   - A family of specifications for implementing wireless communication networks according to IEEE 802.11 xx wherein xx denotes a multiplicity of amendments to the intial and meanwhile obsolete communication standard IEEE 802.11;
   - WiMAX or Worldwide Interoperability for Microwave Access according to IEEE 802.16;
   - Low-rate wireless personal area networks according to IEEE 802.15.4, including the specifications known as ZigBee, ISA100.11a, WirelessHART, MiWi, SNAP, and/or Thread, along with provisions extending upper layers which are not defined in IEEE 802.15.4.
- Wireless communication protocols for mobile devices and data terminals, based on the GSM/EDGE and UMTS/HSPA technologies, here particularly including 5th generation wireless systems, or 5G.

The environment comprises both, indoor and outdoor environments, including environments such as industrial environments, office environments, hospital environments, residential building environments or public outdoor environments such as trade fair sites, parks, traffic zones, roads or public transport sites. The vehicles moving within the environment may include cars, trains or boats.

The level of autonomy for the movement of a vehicle may comprise autonomous or semi-autonomous movement. The autonomous or semi-autonomous movement may comprise an assisted autonomy of vehicles in various grades ranging from fully autonomous vehicles without any driver interference down to vehicles with driver-assisting capabilities.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for controlling a vehicle moving within an environment, the method comprising:
- determining, by a route controller, a route control signal for controlling the vehicle to complete a route, the route control signal representing a route trajectory of the vehicle that enables the vehicle to complete the route in accordance with an optimization criterion;
- determining, by a wireless communication quality controller, a wireless communication quality control signal for controlling the vehicle based on the route control signal, the wireless network coverage control signal representing a modification to the route trajectory of the vehicle determined by the route controller to cause the vehicle to deviate from the route trajectory to meet a wireless communication quality constraint; and;
- combining, by a combining controller, the route control signal and the wireless communication quality control signal to generate a combined control signal representing an optimized trajectory of the vehicle that meets the communication quality constraint and enables the vehicle to complete the route.

2. The method according to claim 1, comprising the step of:
- controlling, by a motion controller, motion of the vehicle to follow the optimized trajectory according to the combined control signal.

3. The method according to claim 1, wherein the vehicle is a guided vehicle or an autonomous guided vehicle.

4. The method according to claim 1, wherein the environment is an industrial environment.

5. The method according to claim 1, wherein determining the route control signal is further based on the predicted motion of the one or more other vehicles.

6. The method according to claim 1, wherein said wireless communication quality constraint at least comprises:
- a signal quality;
- an availability;
- a data rate;
- a latency;
- a bit error ratio;
- a network status; and/or;
- a packet error ratio;

7. The method according to claim 1, wherein at least one of the vehicles is a vehicle moving autonomously within the environment, the vehicle being equipped with a wireless client.

8. The method according to claim 1, wherein controlling the motion of the vehicle means transmitting a combined control signal representing the optimized trajectory of a partial or complete route of the vehicle.

9. A non-transitory computer-readable storage medium having stored thereon computer executable program code which, when executed by a computing device, cause the computing device to perform operations including:
- determining, by a route controller, a route control signal for controlling a vehicle moving within an environment to complete a route, the route control signal representing a route trajectory of the vehicle that enables the vehicle to complete the route in accordance with an optimization criterion;
- determining, by a wireless communication quality controller, a wireless communication quality control signal for controlling the vehicle based on the route control signal, the network coverage control signal representing a modification to the route trajectory of the vehicle determined by the route controller to cause the vehicle to deviate from the route trajectory to meet a wireless communication quality constraint; and;
- combining, by a combining controller, the route control signal and the wireless communication quality control signal to generate a combined control signal representing an optimized trajectory of the vehicle that meets the communication quality constraint and enables the vehicle to complete the route.

10. A controller for controlling a vehicle moving within an environment, the controller device comprising:
- a processor; and
- a non-transitory computer-readable storage medium storing instructions for:
- determining, by a route controller, a route control signal for controlling the vehicle to complete a route, the route control signal representing a route trajectory of the vehicle that enables the vehicle to complete the route in accordance with an optimization criterion;
- determining, by a wireless communication quality controller, a wireless communication quality control signal for controlling the vehicle based on the route control signal, the network coverage control signal representing a modification to the route trajectory of the vehicle determined by the route controller to cause the vehicle to deviate from the route trajectory to meet a wireless communication quality constraint; and;
- combining the route control signal and the wireless communication quality control signal to generate a combined control signal representing an optimized trajectory of the vehicle that meets the communication quality constraint and enables the vehicle to complete the route.

11. A vehicle equipped with a controller according to claim 9.

12. A controller according to claim 10, the controller being communicatively coupled to at least one base station, the at least one base station establishing a wireless network.
